# EUROPEAN PATENT APPLICATION

(11) **EP 3 181 409 A1**
(43) Date of publication of application: **21.06.2017**
(21) Application number: 16748250.4
(22) Date of filing: 06.07.2016
(51) Int. Cl.: B60R 16/037

(54) **METHOD AND APPARATUS FOR CONTROLLING OPERATIONS OF IN-VEHICLE INFOTAINMENTS**

(30) Priority: 12.10.2015 CN 201510659246
(71) Applicant: LE Holdings (Beijing) Co., Ltd., Beijing 100025 (CN); Leauto Intelligent Technology (BEIJING) Co. Ltd, Beijing 100025 (CN)
(72) Inventor: HONG, Mingsong, Beijing 100025 (CN)
(74) Representative: KIPA AB
(86) International application number: PCT/CN2016/088885
(87) International publication number: WO 2017/063398

(57) **Abstract**

Disclosed is a method for controlling the operation of in-vehicle infotainment and device thereof, the method includes: detecting whether a passenger sits on the non-driver's seat, if the passenger sits on the non-driver's seat, running the corresponding in-vehicle infotainment to provide service; and detecting whether the passenger sitting on the non-driver's seat shifts, if the passenger sitting on the non-driver's seat shifts, closing the corresponding in-vehicle infotainment to stop providing service. By adopting the method and device provided by embodiments of the present disclosure, it may run the corresponding in-vehicle infotainment automatically to provide service when there is a passenger on the non-driver's seat, and add the entertainment for passengers in the ride; besides, when the passenger gets off the vehicle midway or shifts to another seat, it may close the corresponding in-vehicle infotainment to stop providing service automatically, thus saves the quantity of electricity and reduces oil wear.

## Description

### CROSS-REFERENCE TO RELATED APPLICATIONS

The present disclosure is based upon and claims priority to Chinese Patent Application No. 201510659246.4, entitled "METHOD FOR CONTROLLING OPERATION OF IN-VEHICLE INFOTAINMENT AND DEVICE THEREOF", filed on October 12, 2015, the entire contents of all of which are incorporated herein by reference.

### TECHNICAL FIELD

The present disclosure relates to technical field of electronic technology, and in particular, to a method for controlling operation of in-vehicle infotainment and device thereof.

### BACKGROUND

With the development of the manufacturing industry, more and more people own a vehicle, and vehicles become an increasingly important part of people's life.

In-vehicle infotainment (IVI) is a vehicle-mounted integrated information processing system which adopts the specific vehicle-mounted CPU and is based on vehicle body bus system and Internet service. The in-vehicle infotainment may achieve functions such as three-dimensional navigation, real-time traffic, driver assistance, fault detection, vehicle information, vehicle body bus control, mobile officing, wireless communication, online entertainment ,and TSP(telematics service provider)service etc., and promote the level of electronization, networking and intelligentialize of Vehicles enormously.

At present, the operating interface of the in-vehicle infotainment is set on the center console near the driver to facilitate the driver's control. For ordinary vehicles, there is no in-vehicle infotainment set for passengers on the co-pilot seat and rear seats, so they may feel boring in the riding. In order to meet users' needs, some premium vehicles are equipped with in-vehicle infotainment to serve for passengers on the co-pilot seat and rear seats. Generally, when the vehicle starts, the in-vehicle infotainment starts as well; after the vehicle is shut down, the in-vehicle infotainment is closed as well. That means, there will be circumstances such as there is no passenger on the co-pilot seat or rear seat, but the in-vehicle infotainment is still running, which leads to a waste of the electric energy of the vehicle, thusly increase the oil consumption.

Therefore, a technical problem needs to be solved urgently by a skilled person in the art is, how may it close the corresponding in-vehicle infotainment timely when there is no passenger on the co-pilot seat or rear seats.

### SUMMARY

An embodiment of the present disclosure provide a method for controlling the operation of the in-vehicle infotainment and device thereof, to solve the technical problem in the prior art that, when there is no passenger ,the in-vehicle infotainments corresponding to the co-pilot seat and rear seats cannot be closed timely.

According to an aspect of the present disclosure, embodiments of the present disclosure discloses a method for controlling the operation of in-vehicle infotainment, adapted to a vehicle, each non-driver's seat being provided with a set of corresponding in-vehicle infotainment;
wherein the method for controlling the operation of the in-vehicle infotainment includes:
detecting whether a passenger sits on the non-driver's seat, if the passenger sits on the non-driver's seat, running the corresponding in-vehicle infotainment to provide service.
detecting whether the passenger sitting on the non-driver's seat shifts, if the passenger on the non-driver's seat shifts, closing the corresponding in-vehicle infotainment to stop providing service.

Preferably, detecting whether a passenger sits on the non-driver's seat, if the passenger sits on the non-driver's seat, running the corresponding in-vehicle infotainment to provide service includes:
determining whether pressure applied to the non-driver's seat is larger than a preset pressure, if it is larger, it is determined that the passenger sits on the non-driver's seat, running the corresponding in-vehicle infotainment to provide service.

Preferably, detecting whether the passenger sitting on the non-driver's seat shifts, if the passenger sitting on the non-driver's seat shifts, closing the corresponding in-vehicle infotainment to stop providing service includes:
determining whether pressure applied to the non-driver's seat is less than or equal to the preset pressure, and if it is less than or equal to, it is determined that the passenger sitting on the non-driver's seat shifts, closing the corresponding in-vehicle infotainment to stop providing service.

Preferably, detecting whether the passenger sitting on the non-driver's seat shifts, if the passenger sitting on the non-driver's seat shifts, closing the corresponding in-vehicle infotainment to stop providing service includes:
receiving signal of opening and closing of a vehicle door;
detecting whether the passenger sitting on the non-driver's seat shifts according to the signal, if the passenger sitting on the non-driver's seat shifts, closing the corresponding in-vehicle infotainment to stop providing service.

Preferably, after the passenger sitting on the non-driver's seat shifts, and before closing the corresponding in-vehicle infotainment to stop providing service, the method further includes:
detecting gear shift of the vehicle, if the gear shift is shifted to drive from park, closing the corresponding in-vehicle infotainment to stop providing service.

Preferably, when detecting gear shift of the vehicle, after it is detected the gear shift is shifted to drive from park, and before closing the corresponding in-vehicle infotainment to stop providing service, the method further includes:
determining whether vehicle speed is larger than or equal to a preset value, if it is larger than or equal to the preset value, closing the corresponding in-vehicle infotainment to stop providing service.

According to an aspect of the present disclosure, embodiments of the present disclosure further discloses a device for controlling the operation of in-vehicle infotainment, including:
a service starting module, configured to detect whether a passenger sits on the non-driver's seat, if the passenger sits on the non-driver's seat, running corresponding in-vehicle infotainment to provide service.
a service ending module, configured to detect whether the passenger sitting on the non-driver's seat shifts, if the passenger on the non-driver's seat shifts, closing the corresponding in-vehicle infotainment to stop providing service.

Preferably, the service starting module is concretely configured to determine whether pressure applied to the non-driver's seat is larger than a preset pressure, if it is larger, it is determined that the passenger sits on the non-driver's seat, running the corresponding in-vehicle infotainment to provide service.

Preferably, the service ending module is concretely configured to determine whether pressure applied to the non-driver's seat is less than or equal to the preset pressure, and if it is less than or equal to, it is determined that the passenger sitting on the non-driver's seat shifts, closing the corresponding in-vehicle infotainment to stop providing service.

Preferably, the device further including:
a door signal receiving module, configured to receive signal of opening and closing of a vehicle door;
the service ending module is concretely configured to detect whether the passenger sitting on the non-driver's seat shifts according to the signal, if the passenger sitting on the non-driver's seat shifts, closing the corresponding in-vehicle infotainment to stop providing service.

Preferably, the service ending module further including:
a gear shift detecting module, configured to detect gear shift of the vehicle, if the gear shift is shifted to drive from park, closing the corresponding in-vehicle infotainment to stop providing service.

Preferably, the service ending module further including:
a vehicle speed determining module, configured to determine whether vehicle speed is larger than or equal to a preset value, if it is larger than or equal to the preset value, closing the corresponding in-vehicle infotainment to stop providing service.

According to still another aspect of the present disclosure, a computer program is provided, including a computer readable code, wherein the computer readable code triggers the computing device to execute the control method of the computing device when operating on the computing device.

According to another further aspect of the present disclosure, a computer readable medium is provided, wherein the computer readable program is stored in the computer readable medium.

With the method for controlling the operation of in-vehicle infotainment and device thereof provided in the embodiment of the present disclosure, it is capable to run the corresponding in-vehicle infotainment automatically to provide service when there is a passenger on the non-driver's seat, and add the entertainment for passengers in the ride. Besides, when the passenger gets off the vehicle midway or shift to other seats ,it closes the corresponding in-vehicle infotainment to stop providing service automatically, thus saves the quantity of electricity and reduces oil consumption.

The above illustration are just summary of technical solution of the disclosure. In order to allow a skilled person in the art to know the technical means of the present disclosure, and implement the invention acording to the content of the specification, and further in order to make the above and other objectives of the disclosure more clear, detailed embodiments are provided hereinbelow.

### BRIEF DESCRIPTION OF THE DRAWINGS

In order to more apparently describe the technical schemes in the embodiments of the present disclosure or in the prior art, accompanying figures necessarily used in the description of the embodiments or the prior art will be simply explained hereinafter. Obviously, the accompanying figures described below will form the embodiments of the present disclosure. An ordinary person skilled in the art may conceive further figures in accordance with these accompanying figures without contributing creative labor.
FIG. 1 is a sectional diagram showing a four-seat vehicle provided according to the embodiment of the present disclosure.
FIG. 2 is a flowchart showing the steps of the method for controlling the operation of in-vehicle infotainment according to the first embodiment of the present disclosure.
FIG. 3 is a flowchart showing the steps of the method for controlling the operation of in-vehicle infotainment according to the second embodiment of the present disclosure.
FIG. 4 is a flowchart showing the steps of the method for controlling the operation of in-vehicle infotainment according to the third embodiment of the present disclosure.
FIG. 5 is a schematic diagram showing the structure of the device for controlling the operation of the in-vehicle infotainment provided according to the fourth embodiment of the present disclosure.
FIG. 6 is a schematic diagram showing the structure of the device for controlling the operation of the in-vehicle infotainment provided according to the fifth embodiment of the present disclosure.
FIG. 7 is a schematic diagram showing the structure of the device for controlling the operation of the in-vehicle infotainment provided according to the sixth embodiment of the present disclosure.
FIG. 8 schematically illustrates a block diagram of a computing device used to execute the method according to the present disclosure; and
FIG. 9 schematically illustrates a storage cell used to keep or carry a program code for realizing the method according to the present disclosure.

### DETAILED DESCRIPTION

In order that objectives, technical schemes and advantages of the embodiments of the present disclosure become more apparent, the technical schemes in the embodiments of the present disclosure will be thoroughly and completely described below in conjunction with the accompanying figures in the embodiments of the present disclosure. It is obvious that the embodiments described herein are some of embodiments of the present disclosure rather than entire embodiments. On the basis of the embodiments of the present disclosure, other embodiments conceived by an ordinary person skilled in the art without creative labor would all fall into the scope of the present disclosure.

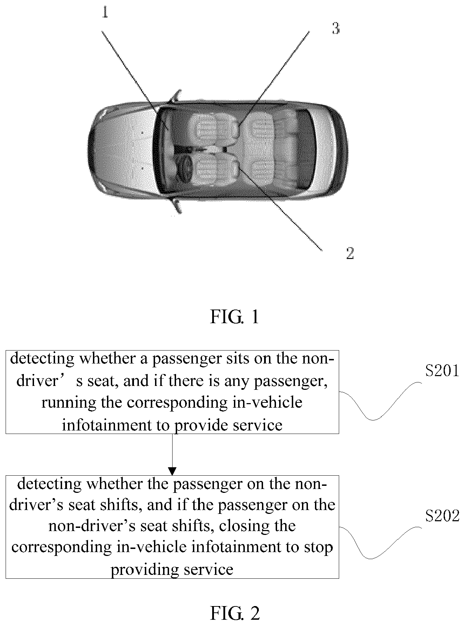

According to the research of the inventor, an automotive sensor is a thin film contact sensor, which may detect the pressure on the seat. Contacts of a sensor are distributed evenly in seat's force-bearing surface to detect the force applied to the seat. Seats in a vehicle may have built-in automotive sensors, and the centre console and the back of front seats may have the in-vehicle infotainment. FIG. 1 is a sectional diagram of a four-seat vehicle. As shown in the FIG. 1, the in-vehicle infotainment 1 of the co-pilot's seat may be disposed in the centre console in front of the co-pilot's seat, the in-vehicle infotainment 2 of the left rear seat may be disposed in the back of driver's seat such as the headrest position, and the in-vehicle infotainment 3 of the right rear seat may be disposed in the back of co-pilot's seat. The pressure detected by the automotive sensor may be used to determine whether there is a passenger on the seat. When there is a passenger on the seat, it is capable to run the in-vehicle infotainment corresponding to the seat automatically to provide service for the passenger, which adds entertainment for the passenger in the ride. When the passenger gets off or shifts to other seats, it is capable to close the corresponding in-vehicle infotainment automatically to stop providing service, and thus save energy and reduce oil consumption.

### First embodiment

Referring to FIG. 2, It is a flow chart showing the steps of the method for controlling the operation of in-vehicle infotainment provided by the first embodiment of the present disclosure.

The first embodiment provides a method for controlling the operation of in-vehicle infotainment adapted to motor vehicles, and every non-driver's seat has a set of corresponding in-vehicle infotainment. As shown in FIG. 2, the method may include the following steps:
Step S201, detecting whether a passenger sits on the non-driver's seat, and if there is any passenger, running the corresponding in-vehicle infotainment to provide service.
   In the step, seats except for the driver's seat are called non-driver's seats, such as co-pilot's seat and rear seats. If there is a passenger on the non-driver's seat it is capable to run the corresponding in-vehicle infotainment to provide service and increase fun for passengers in the ride; if there is no passenger on the non-driver's seat, keeping the corresponding in-vehicle infotainment closed to avoid the waste of electricity. In the embodiment, automotive sensors may be disposed in the seats of a vehicle, and it is capable to detect whether there is pressure applied to the corresponding seat by the automotive sensors, thusly determining whether there is passenger on the corresponding seat. For example: in the embodiment, the automotive sensors may be disposed in the co-pilot's seat in FIG. 1, when a passenger sits on the seat, the automotive sensor detects the pressure on the co-pilot's seat and thus determines whether there is a passenger on the corresponding seat.
Step S202, detecting whether the passenger on the non-driver's seat shifts, and if the passenger on the non-driver's seat shifts, closing the corresponding in-vehicle infotainment to stop providing service.

In the step, the passenger may get off the vehicle midway or shift to another seats, these two situations may be considered as the passenger's shift. When the passenger gets off the vehicle midway, it is capable to close the corresponding in-vehicle infotainments to stop providing service, in order to reduce the power consumption of the in-vehicle infotainment; when the passenger shifts to another seat, it is capable to close the in-vehicle infotainment corresponding to the original seat, and run the in-vehicle infotainment corresponding to the non-driver's seat the passenger shifts to, thus to continue providing service.

Through the method for controlling the operation of in-vehicle infotainment provided by the first embodiment of the present disclosure, it is capable to run the corresponding in-vehicle infotainment to provide service when there is a passenger on the non-driver's seat, thusly increase entertainment for passengers on the ride. It is also capable to close the corresponding in-vehicle infotainment to stop providing service for the passenger when the passenger gets off the vehicle midway or shifts to another seat, thusly save power and reduce the oil consumption of the vehicle.

### Second embodiment

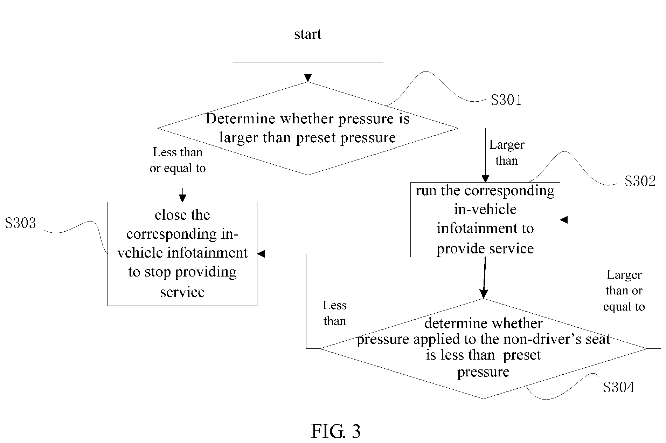

Referring to FIG. 3, It is a flow chart showing the steps of the method for controlling the operation of in-vehicle infotainment provided by the second embodiment of the present disclosure.

On the basis of the first embodiment of the present disclosure, the second embodiment provides a method for controlling the operation of the in-vehicle infotainment. As shown in FIG. 3, the method may include the following steps:
Step S301, determining whether the pressure applied to a non-driver's seat is larger than a preset pressure.
   In the step, the preset pressure is the basis to determine whether there is a passenger on the non-driver's seat, and the preset pressure is less than the pressure of common people's weight, such as 20 kg. The automotive sensors may be disposed in non-driver's seats, and the automotive sensors may determine whether there is a passenger on the seat by detecting changes of pressure applied to the non-driver's seat. When a passenger sits on the non-driver's seat disposed with automotive sensors, the pressure applied to the non-driver's seat may enlarge. If pressure applied to the non-driver's seat is larger than the preset pressure, it may determine that there is a passenger on the non-driver's seat, and thus to execute step S302; if pressure applied to the non-driver's seat is less than or equal to the preset pressure, it may determine there is no passenger on the non-driver's seat, and thus to execute step S303.
Step S302, running the corresponding in-vehicle infotainment to provide service.
Step S303, closing the corresponding in-vehicle infotainment to stop providing service.
Step S304, determining whether the pressure applied to the non-driver's seat is less than the preset pressure.

In the step, when a passenger shifts, the pressure applied to the non-driver's seat reduces; if pressure applied to the non-driver's seat is less than or equal to preset pressure, it means the passenger on the non-driver's seat shifts, step S303 may be executed; if pressure applied to the non-driver's seat is larger than the preset pressure, step S302 may be executed repeatedly. The detection of the pressure may be real-time, or periodic detection.

Through the method for controlling the operation of in-vehicle infotainment provided by the second embodiment of the present disclosure, it is capable to use the automotive sensor to detect whether there is a passenger on the seat. When there is a passenger on the seat, it is capable to run the corresponding in-vehicle infotainment automatically to provide service for the passenger, and thus improve the entertainment for passengers on the ride. When the passenger gets off the vehicle midway or shifts to another seat, it is capable to close the corresponding in-vehicle infotainment to stop providing service for passengers, and thus save power and reduce the oil consumption of the vehicle.

### Third embodiment

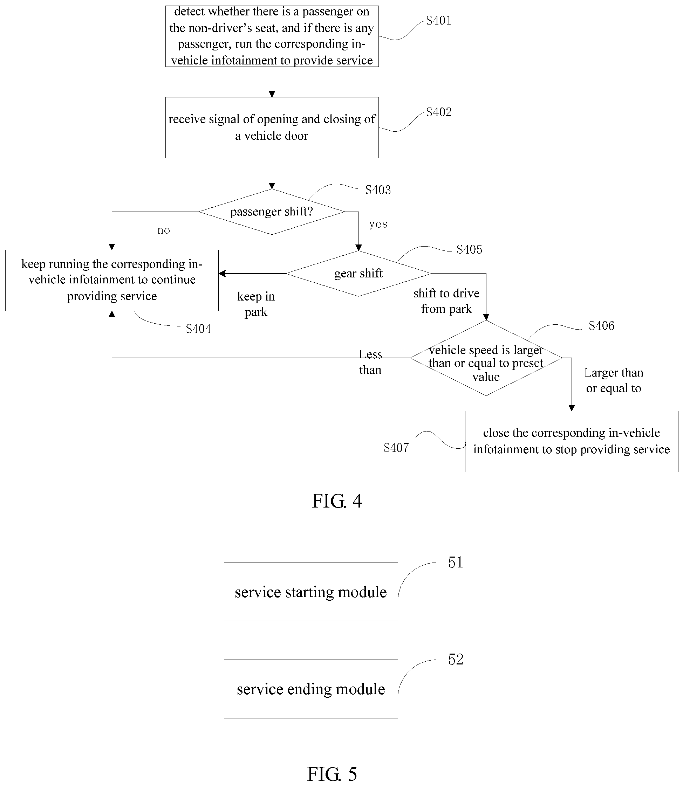

Referring to FIG. 4, It is a flow chart showing the steps of a method for controlling the operation of in-vehicle infotainment provided by an embodiment of the present disclosure.

During the ride, passengers may get off for a short rest, and the vehicle is not stalled, in this situation the in-vehicle infotainment needn't to be closed. To solve the technical problem, the third embodiment of the present disclosure provides a method for controlling the operation of in-vehicle infotainment on the basis of the first embodiment and/or the second embodiment. As shown in FIG. 4, the method may include the following steps:
Step S401, detecting whether there is a passenger on the non-driver's seat, and if there is any passenger, running the corresponding in-vehicle infotainment to provide service.
Step S402, receiving signal of opening and closing of a vehilce door.
   In the step, when the passenger in the vehicle gets off, he or she needs to open the door and then close it, as a result, when there is a passenger gets off, the signal of vehicle door's open and close may be received.
Step S403, detecting whether the passenger on the non-driver's seat shifts.
   In the step, if the passenger on the non-driver's seat does not shift, Step S404 may be executed; if the passenger on the non-driver's seat shifts, Step S405 may be executed.
Step S404, keeping running the corresponding in-vehicle infotainment to continue providing service.
Step S405, detecting the gear shift of the vehicle.
   In the step, the gear shifts of a vehicle with an automatic transmission mainly include: a parking gear P, a reverse gear R, a null gear N, a drive gear D, and a sport gear S. Gears P and N are park, Gears D and S are drive. If the gear is shifted from park to drive, then step S406 may be executed; when the gear keeps in park, Step S405 may be executed repeatedly.
Step S406, determining whether the vehicle speed is larger than or equal to a preset value.
   In the step, the preset value is a symbol of the movement of a vehicle, such as 30 km/h. Through determining whether the vehicle speed at the moment is larger than or equal to the preset value, it is capable to determien whether a vehicle is in the running state, and the passenger getting off the vehicle does not get on again. If the vehicle speed is larger than or equal to the preset value, step S407 may be executed, and the corresponding in-vehicle infotainment is closed to stop providing service. If the vehicle speed is less than the preset value, the operation of the vehicle at the moment is likely to be just a move, and the passenger getting off the vehicle may get on again, then step S404 may be executed repeatly.
Step S407, closing the corresponding in-vehicle infotainment to stop providing service.

Through the method for controlling the operation of in-vehicle infotainment provided by the third embodiment of the present disclosure, it is capable to keep the corresponding in-vehicle infotainment continue running to provide service when the passenger gets off temporarily, and avoid that the in-vehicle infotainment is turned on and off again and again leading to unnecessary waste of energy. It is also capable to confirm that the passenger gets off the vehicle an does not take the vehicle again in a short time, and thusly the corresponding in-vehicle infotainment is closed to stop providing service, therefore preventing the waste of the power and reducing the oil consumption of the vehicle.

### Fourth embodiment

Referring to FIG. 5, It is a schematic diagram showing the structure of the device for controlling the operation of the in-vehicle infotainment provided by the fourth embodiment of the present disclosure.

The fourth embodiment of the present disclosure provides a device for controlling the operation of the in-vehicle infotainment, which may execute the method for controlling the operation of the in-vehicle infotainment provided by the first embodiment of the present disclosure. As shown in FIG. 5, the device may include: a service starting module 51 and a service ending module 52.

The service starting module 51 is configured to detect whether there is a passenger on the non-driver's seat, and if there is a passenger, running the corresponding in-vehicle infotainment to provide service. The service ending module 52 is configured to detect whether the passenger on the non-driver's seat shifts, and if the passenger on the non-driver's seat shifts, closing the corresponding in-vehicle infotainment to stop providing service.

In the service starting module 51, seats except for the driver's seat are called non-driver's seats, such as co-pilot's seat and rear seats. If there is a passenger on the non-driver's seat, running the corresponding in-vehicle infotainment to provide service and increase fun for passengers in the ride; if there is no passenger on the non-driver's seat, keeping the corresponding in-vehicle infotainment closed to avoid the waste of electricity.

In the service ending module52, a passenger gets off the vehicle midway or shifts to another seat, these two situations may be considered as that the passenger shifts. When the passenger gets off the vehicle midway, it is capable to close the corresponding in-vehicle infotainment to reduce the power consumption of the in-vehicle infotainment; when the passenger shifts to another seat, it is capable to close the in-vehicle infotainment corresponding to the original seat, and run the in-vehicle infotainment corresponding to the non-driver's seat where the passenger shifts to, in order to continue providing service.

Through the device for controlling the operation of the in-vehicle infotainment provided by the fourth embodiment of the present disclosure, it is capable to run the corresponding in-vehicle infotainment to provide service when there is a passenger on the non-driver's seat, thus increase entertainment for passengers during the ride. It is also capable to close the corresponding in-vehicle infotainment to stop providing service for the passenger when the passenger gets off the vehicle midway or shifts to another seat, thus save power and reduce the oil consumption of the vehicle.

### Fifth embodiment

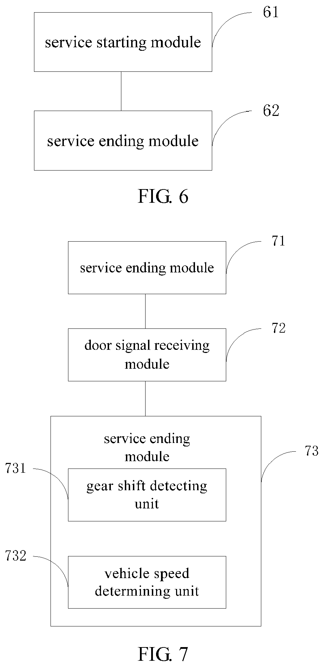

Referring to FIG. 6, It is a flow chart showing the steps of the method for controlling the operation of in-vehicle infotainment provided by the fifth embodiment of the present disclosure.

The fifth embodiment of the present disclosure provides a device for controlling the operation of the in-vehicle infotainment. It is capable to execute the method for controlling the operation of in-vehicle infotainment provided by the second embodiment of the present disclosure. As shown in FIG. 6, the device may include the following modules: a service starting module 61 and a service ending module 62.

The service starting module 61 is concretely configured to determine whether the pressure applied to the non-driver's seat is larger than a preset pressure. If the pressure applied to the non-driver's seat is larger than the preset pressure, it means there is a passenger sitting on the non-driver's seat, then running the corresponding in-vehicle infotainment to provide service. The service ending module 62 is concretely used to determine whether the pressure applied to automotive sensor is less than the preset pressure. If the pressure applied to the non-driver's seat is less than the preset pressure, it means the passenger sitting on the non-driver's seat shifts, then closing the corresponding in-vehicle infotainment to stop providing service.

In the service starting module61, the preset pressure is the basis to determine whether there is a passenger sitting on the non-driver's seat, and the preset pressure is less than the pressure of common people's weight, such as 20 kg. It is capable to dispose automotive sensors in non-driver's seats, and automotive sensors may determine whether there is a passenger on the seat by detecting changes of pressure applied to the non-driver's seat. When a passenger sits on the non-driver's seat disposed with automotive sensors, pressure applied to the non-driver's seat may enlarge. If pressure applied to the non-driver's seat is larger than preset pressure, it is capable to determine there is a passenger on the non-driver's seat, and thus to run the corresponding in-vehicle infotainment to provide service.

In the service ending module 62, when a passenger shifts, the pressure applied to the non-driver's seat may reduce. If the pressure applied to the non-driver's seat is less than or equal to the preset pressure, it means that the passenger on the non-driver's seat shifts. Then it is capable to close the corresponding in-vehicle infotainment to stop providing service.

Through the device for controlling the operation of the in-vehicle infotainment provided by the fifth embodiment of the present disclosure, it is capable to use the automotive sensors to detect whether there is a passenger on the seat. When there is a passenger on the seat, it is capable to run the in-vehicle infotainment corresponding to the seat automatically to provide service for the passenger, and thus improve the entertainment for passengers during the ride. When the passenger gets off the vehicle midway or shifts to another seat, it is capable to close the corresponding in-vehicle infotainment to stop providing service for passengers, and thus save power and reduce the oil consumption of the vehicle.

### Sixth embodiment

Referring to FIG. 7, It is a schematic diagram showing the structure of the method for controlling the operation of in-vehicle infotainment provided by the sixth embodiment of the present disclosure.

The sixth embodiment of the present disclosure provides a device for controlling the operation of the in-vehicle infotainment. It is capable to execute the method for controlling the operation of in-vehicle infotainment provided by the third embodiment of the present disclosure. As shown in FIG. 7, the device may include: a service starting module71, a door signal receiving module 72 and a service ending module73. The service ending module includes: a gear shift detecting unit 731 and a vehicle speed determining unit 732.

The service starting module 71 is configured to detect whether there is a passenger on the non-driver's seat, and if there is a passenger, then running the corresponding in-vehicle infotainment to provide service; the door signal receiving module 72 is configured to receive the signal of opening and closing of the vehicle door; the service ending module 73 is configured to detect whether the passenger on the non-driver's seat shifts according to the signals. If the passenger on the non-driver's seat shifts, then closing the corresponding in-vehicle infotainment to stop providing service.

The gear shift detecting unit 731 is configured to detect the gear shift of the vehicle. If the gear shift is shifted from park to drive, then closing the corresponding in-vehicle infotainment to stop providing service.

The vehicle speed determining unit 732 is configured to determine whether the vehicle speed is larger than or equal to the preset value. If the vehicle speed is larger than or equal to the preset value, then closing the corresponding in-vehicle infotainment to stop providing service.

In the gear shift detecting unit 731, the gears of a vehicle with an automatic transmission mainly include: a parking gear P, a reverse gear R, a null gear N, a drive gear D,and a sport gear S. If the gear is shifted from park to drive, then it means the vehicle is converted into motion from a static state.

In the vehicle speed determining unit 732, the preset value is a symbol of a vehicle's running, such as 30 km/h. Through determining whether the vehicle speed at the moment is larger than or equal to the preset value, it is capable to determine whether a vehicle is in the running state, and that means the passenger gets off does not get on again. If the vehicle speed is larger than or equal to the preset value, then closing the corresponding in-vehicle infotainment to stop providing service. If the vehicle speed is less than the preset value, the operation of the vehicle at the moment is likely to be just a move, and the passenger gets off the vehicle may get on again, then it is capable to keep the corresponding in-vehicle infotainment open to provide service.

Through the device for controlling the operation of the in-vehicle infotainment provided by the sixth embodiment of the present disclosure, it is capable to keep the corresponding in-vehicle infotainment continue running to provide service when the passenger gets off temporarily, avoiding that the in-vehicle infotainment is turned on and off again and again, thus prevent the waste of the power and reduce the oil consumption of the vehicle.

The device embodiment is described above merely for a schematic purpose, wherein the units explained as individual members may or may not be physically separated, the members shown as units may or may not be physical units and they can be located in a place or also can be distributed to network units. As necessary in practice, some or all of the modules can be selected to complete the objectives of the schemes of the embodiments. An ordinary person skilled in the art may understand and implement the embodiments without contributing creative labor.

Each of devices according to the embodiments of the disclosure can be implemented by hardware, or implemented by software modules operating on one or more processors, or implemented by the combination thereof. A person skilled in the art should understand that, in practice, a microprocessor or a digital signal processor (DSP) may be used to realize some or all of the functions of some or all of the modules in the device according to the embodiments of the disclosure. The disclosure may further be implemented as device program (for example, computer program and computer program product) for executing some or all of the methods as described herein. Such program for implementing the disclosure may be stored in the computer readable medium, or have a form of one or more signals. Such a signal may be downloaded from the internet websites, or be provided in carrier, or be provided in other manners.

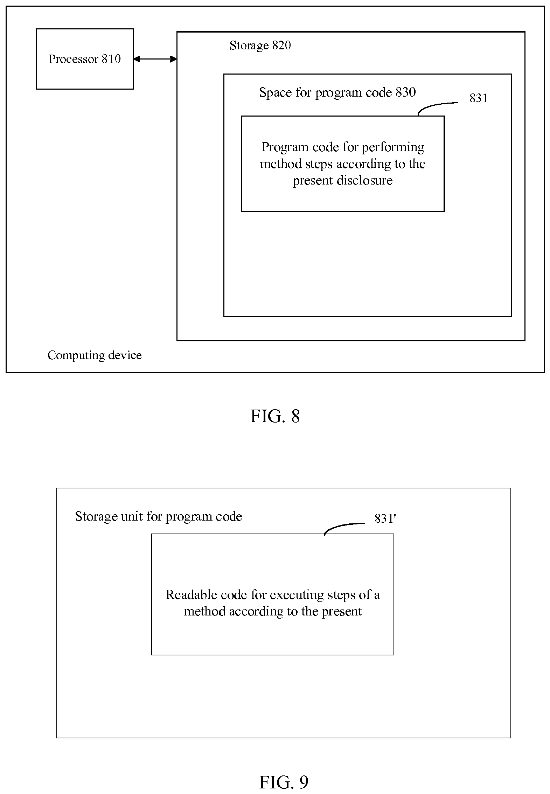

For example, FIG. 8 illustrates a block diagram of a computing device for executing the method for controlling the operation of in-vehicle infotainment according the disclosure. Traditionally, the computing device includes a processor 810 and a computer program product or a computer readable medium in form of a memory 820. The memory 820 could be electronic memories such as flash memory, EEPROM (Electrically Erasable Programmable Read - Only Memory), EPROM, hard disk or ROM. The memory 820 has a memory space 830 for executing program codes 831 of any steps in the above methods. For example, the memory space 830 for program codes may include respective program codes 831 for implementing the respective steps in the method as mentioned above. These program codes may be read from and/or be written into one or more computer program products. These computer program products include program code carriers such as hard disk, compact disk (CD), memory card or floppy disk. These computer program products are usually the portable or stable memory cells as shown in reference FIG. 9. The memory cells may be provided with memory sections, memory spaces, etc., similar to the memory 820 of the server as shown in FIG. 8. The program codes may be compressed for example in an appropriate form. Usually, the memory cell includes computer readable codes 831' which can be read for example by processors 810. When these codes are operated on the server, the server may execute respective steps in the method as described above.

The "an embodiment", "embodiments" or "one or more embodiments" mentioned in the disclosure means that the specific features, structures or performances described in combination with the embodiment(s) would be included in at least one embodiment of the disclosure. Moreover, it should be noted that, the wording "in an embodiment" herein may not necessarily refer to the same embodiment.

Many details are discussed in the specification provided herein. However, it should be understood that the embodiments of the disclosure can be implemented without these specific details. In some examples, the well-known methods, structures and technologies are not shown in detail so as to avoid an unclear understanding of the description.

It should be noted that the above-described embodiments are intended to illustrate but not to limit the disclosure, and alternative embodiments can be devised by the person skilled in the art without departing from the scope of claims as appended. In the claims, any reference symbols between brackets form no limit of the claims. The wording "include" does not exclude the presence of elements or steps not listed in a claim. The wording "a" or "an" in front of an element does not exclude the presence of a plurality of such elements. The disclosure may be realized by means of hardware comprising a number of different components and by means of a suitably programmed computer. In the unit claim listing a plurality of devices, some of these devices may be embodied in the same hardware. The wordings "first", "second", and "third", etc. do not denote any order. These wordings can be interpreted as a name.

Also, it should be noticed that the language used in the present specification is chosen for the purpose of readability and teaching, rather than explaining or defining the subject matter of the disclosure. Therefore, it is obvious for an ordinary skilled person in the art that modifications and variations could be made without departing from the scope and spirit of the claims as appended. For the scope of the disclosure, the publication of the inventive disclosure is illustrative rather than restrictive, and the scope of the disclosure is defined by the appended claims.

In the end, it should be explained that aforesaid embodiments are provided for the illustrative not limiting purpose of the technical schemes of the present disclosure. Although the present disclosure has been described in detail with reference to the embodiments, it should be understood that modifications or equivalent substitutions can be made to the technical schemes or some of technical features therein as disclosed in the embodiments by those skilled in the art; the modifications or substitutions will not bring the essence of the respective technical schemes to depart from spirit and scope of the technical schemes of the inventive embodiments.

## Claims

1. A method for controlling the operation of in-vehicle infotainment, adapted to a vehicle, each non-driver's seat being provided with a set of corresponding in-vehicle infotainment;
wherein the method for controlling the operation of the in-vehicle infotainment comprises:
detecting whether a passenger sits on the non-driver's seat, if the passenger sits on the non-driver's seat, running the corresponding in-vehicle infotainment to provide service; and
detecting whether the passenger sitting on the non-driver's seat shifts, if the passenger sitting on the non-driver's seat shifts, closing the corresponding in-vehicle infotainment to stop providing service.

2. The method according to claim 1, wherein detecting whether a passenger sits on the non-driver's seat, if the passenger sits on the non-driver's seat, running the corresponding in-vehicle infotainment to provide service comprises:
determining whether pressure applied to the non-driver's seat is larger than a preset pressure, if it is larger, determining that the passenger sits on the non-driver's seat, running the corresponding in-vehicle infotainment to provide service.

3. The method according to claim 1, wherein detecting whether the passenger sitting on the non-driver's seat shifts, if the passenger sitting on the non-driver's seat shifts, closing the corresponding in-vehicle infotainment to stop providing service comprises:
determining whether pressure applied to the non-driver's seat is less than or equal to the preset pressure, and if it is less than or equal to, determining the passenger sitting on the non-driver's seat shifts, closing the corresponding in-vehicle infotainment to stop providing service.

4. The method according to claim 1, wherein detecting whether the passenger sitting on the non-driver's seat shifts, if the passenger sitting on the non-driver's seat shifts, closing the corresponding in-vehicle infotainment to stop providing service comprises:
receiving signal of opening and closing of a vehicle door;
detecting whether the passenger sitting on the non-driver's seat shifts according to the signal, if the passenger sitting on the non-driver's seat shifts, closing the corresponding in-vehicle infotainment to stop providing service.

5. The method according to claim 4, wherein, after the passenger sitting on the non-driver's seat shifts, and before closing the corresponding in-vehicle infotainment to stop providing service, the method further comprises:
detecting gear shift of the vehicle, if the gear shift is shifted to drive from park, closing the corresponding in-vehicle infotainment to stop providing service.

6. The method according to claim 5, wherein when detecting gear shift of the vehicle, after it is detected the gear shift is shifted to drive from park, and before closing the corresponding in-vehicle infotainment to stop providing service, the method further comprises:
determining whether vehicle speed is larger than or equal to a preset value, if it is larger than or equal to the preset value, closing the corresponding in-vehicle infotainment to stop providing service.

7. A device for controlling the operation of in-vehicle infotainment, comprising:
a service starting module, configured to detect whether a passenger sits on the non-driver's seat, if the passenger sits on the non-driver's seat, running corresponding in-vehicle infotainment to provide service.
a service ending module, configured to detect whether the passenger sitting on the non-driver's seat shifts, if the passenger on the non-driver's seat shifts, closing the corresponding in-vehicle infotainment to stop providing service.

8. The device according to claim 7, wherein the service starting module is concretely configured to determine whether pressure applied to the non-driver's seat is larger than a preset pressure, if it is larger, determine that the passenger sits on the non-driver's seat, run the corresponding in-vehicle infotainment to provide service.

9. The device according to claim 7, wherein the service ending module is concretely configured to determine whether pressure applied to the non-driver's seat is less than or equal to the preset pressure, and if it is less than or equal to, determine that the passenger sitting on the non-driver's seat shifts, close the corresponding in-vehicle infotainment to stop providing service.

10. The device according to claim 7, further comprising:
a door signal receiving module, configured to receive signal of opening and closing of a vehicle door;
the service ending module is concretely configured to detect whether the passenger sitting on the non-driver's seat shifts according to the signal, if the passenger sitting on the non-driver's seat shifts, close the corresponding in-vehicle infotainment to stop providing service.

11. The device according to claim 10, wherein the service ending module further comprises:
a gear shift detecting module, configured to detect gear shift of the vehicle, if the gear shift is shifted to drive from park, close the corresponding in-vehicle infotainment to stop providing service.

12. The device according to claim 11, wherein the service ending module further comprises:
a vehicle speed determining module, configured to determine whether vehicle speed is larger than or equal to a preset value, if it is larger than or equal to the preset value, close the corresponding in-vehicle infotainment to stop providing service.

13. A computer program, comprising a computer readable code, wherein the computer readable code causes a computing device to execute the control method for the computing device according to any of claims 1-6 when operating on the mobile terminal.

14. A computer readable medium, in which the computer readable program according to claim 13 is stored.
